# EUROPEAN PATENT APPLICATION

(11) **EP 2 660 089 A1**
(43) Date of publication of application: **06.11.2013**
(21) Application number: 11853664.8
(22) Date of filing: 17.11.2011
(51) Int. Cl.: B60J 3/00, E06B 9/56

(54) **SHADE DEVICE**

(30) Priority: 27.12.2010 JP 2010290268
(71) Applicant: Ashimori Industry Co., Ltd., Osaka-shi Osaka 550-0014 (JP)
(72) Inventor: KATADA Naochika, Settsu-shi Osaka 566-0001 (JP)
(74) Representative: Kilian Kilian & Partner
(86) International application number: PCT/JP2011/076515
(87) International publication number: WO 2012/090617

(57) **Abstract**

A shade device serves to shield a window. The shade device includes a windup device, a main shade configured to partially shield the window and attached to the windup device so as to be drawn therefrom and housed therein, an auxiliary shade configured to shield, of the window, a portion lateral to a portion shielded by the main shade, and an association mechanism that operates the auxiliary shade to advance and retract in a direction different from a drawing and housing direction of the main shade, in association with the operation of drawing and housing the main shade.

## Description

### Technical Field

The present invention relates to a shade device for use in windows of vehicles such as automobiles.

### Background Art

Patent Document 1 discloses a window blind for automobiles for use in a trapezoidal window glass. This window blind for automobiles includes a blind sheet transversely extendable and is configured such that the blind sheet is housed toward the roof side (short side of the window glass) when not being used and that the blind sheet is elastically extended in a transverse direction to match the shape of the window glass when the blind sheet is drawn toward the window sill side (long side of the window glass). More specifically, pull rods provided on the transverse edges of the blind sheet are guided by guide rails, that is, both ends of the pull rods are moved within the guide grooves of the guide rails, whereby the blind sheet is drawn and housed. Then, strips sewn along the longitudinal edges of the blind sheet are moved within another grooves extending in parallel to the guide grooves of the guide rails, whereby the blind sheet is extended and retracted in the width direction along with the drawing and housing operation.

### Prior Art Document

### Patent Document

Patent Document 1: Japanese Patent Application Laid-Open No. 2002-120558

### Summary of the Invention

### Problem to be Solved by the Invention

Unfortunately, in the window blind for automobiles described in Patent Document 1, the shade (blind sheet) is extended and retracted in the width direction so as to match the shape of the window (window glass) as described above. This causes a fear that, for example, the shade may become crinkled or sagged in the drawn state.

Therefore, an object of the present invention is to prevent the shade from becoming crinkled or sagged in the drawn state to shield a window.

### Means to Solve the Problem

A first aspect relates to a shade device for shielding a window, which includes: a windup device; a main shade configured to partially shield the window and attached to the windup device so as to be drawn therefrom and housed therein; an auxiliary shade configured to shield, of the window, a portion lateral to a portion shielded by the main shade; and an association mechanism that operates the auxiliary shade to advance and retract in a direction different from a drawing and housing direction of the main shade, in association with the operation of drawing and housing the main shade.

In a second aspect, the shade device according to the first aspect further includes a drawing member mounted to a drawing-side edge of the main shade, wherein the association mechanism is configured to convert an operation of moving the drawing member in the drawing and housing direction into an operation of moving the auxiliary shade in an advancing and retracting direction.

In a third aspect, in the shade device according to the second aspect, the association mechanism includes: a main-side rack member that is coupled to an end of the drawing member and extends along a moving direction of the end of the drawing member; one sub-side rack member that is provided to the auxiliary shade and extend along the advancing and retracting direction of the auxiliary shade; and a conversion mechanism that includes at least one gear and converts an operation of moving the main-side rack member into an operation of moving the one sub-side rack member.

In a fourth aspect, in the shade device according to the third aspect, the one sub-side rack member is formed such that a plurality of tooth portions are lined in an arcuate shape.

In a fifth aspect, in the shade device according to the third aspect, the association mechanism includes the other sub-side rack member that extends along the advancing and retracting direction of the auxiliary shade and is provided to the auxiliary shade so as to be opposed to the one sub-side rack member with a distance therebetween, and the conversion mechanism includes a first gear member that converts the operation of moving the main-side rack member into the operation of moving the one sub-side rack member, and a second gear member that converts an operation of rotating the first gear member into an operation of moving the other sub-side rack member.

In a sixth aspect, in the shade device according to the fifth aspect, the association mechanism is configured in such a manner that a main-shade-side edge of the auxiliary shade extends along a lateral edge of the main shade at an advanced location such that a moving amount of the one sub-side rack member by the first gear member and a moving amount of the other sub-side rack member by the second gear member differ from each other.

In a seventh aspect, in the shade device according to the sixth aspect, a plurality of tooth portions of the one sub-side rack member and a plurality of tooth portions of the other sub-side rack member are lined into corresponding arcuate shapes in a convex manner toward any one of the one sub-side rack member and the other sub-side rack member, the any one thereof being moved more than the other thereof.

In an eighth aspect, in the shade device according to the first to seventh aspects, a pair of the auxiliary shades are provided so as to shield, of the window, both portions lateral to the portion shielded by the main shade, and a pair of the association mechanisms are provided so as to respectively operate the pair of auxiliary shades to advance and retract.

In a ninth aspect, in the shade device according to the first to eighth aspects, the auxiliary shade is formed of a light-blocking member.

### Effects of the Invention

According to the shade device of the first aspect, the auxiliary shade capable of shielding, of the window, the portion lateral to the portion shielded by the main shade, is operated to advance and retract in a direction different from the drawing and housing direction of the main shade in association with the operation of drawing and housing the main shade. This does not cause the deformation of the main shade for extending and retracting, and thus, the auxiliary shade can shield the portion that cannot be shielded by the main shade. Accordingly, the main shade is prevented from becoming crinkled or sagged in the drawn state, whereby the window can be shielded.

According to the shade device of the second aspect, the association mechanism is configured so as to convert the operation of moving the drawing member in the drawing and housing direction that is attached to the drawing-side edge of the main shade into the operation of moving the auxiliary shade in the advancing and retracting direction, which enables to operate the auxiliary shade to advance and retract more correspondingly to the operation of drawing and housing the main shade.

According to the shade device of the third aspect, the conversion mechanism including at least one gear converts the operation of moving the main-side rack member extending along the moving direction of the end of the drawing member into the operation of moving the one sub-side rack member in the advancing and retracting direction of the auxiliary shade. That is, the operation of moving the drawing member is converted into the operation of moving the auxiliary shade through meshing of the main-side rack member, the gear of the conversion mechanism, and the one sub-side rack member. This enables to operate the auxiliary shade to advance and retract in association with the operation of drawing and housing the main shade more reliably. In addition, the operation of advancing and retracting the auxiliary shade can be designed more flexibly through the setting of the number of teeth.

According to the shade device of the fourth aspect, the one sub-side rack member is formed such that a plurality of tooth portions are arcuately lined. This enables the auxiliary shade to move in the arcuate path and enables to design the moving path of the auxiliary shade more flexibly.

According to the shade device of the fifth aspect, the other sub-side rack member is provided to the auxiliary shade to be opposed to the one sub-side rack member with a distance therebetween. In addition, the first gear member is configured to convert the operation of moving the main-side rack member into the operation of moving the one sub-side rack member, and the second gear member is configured to convert the operation of rotating the first gear member into the operation of moving the other sub-side rack member. In this manner, the operation of moving the main-side rack member is converted into the operations of moving the one sub-side rack member and the other sub-side rack member in the state in which the first gear member and the second gear member are sandwiched between the one sub-side rack member and the other sub-side rack member. Accordingly, through the meshing, the auxiliary shade can be held and be advanced and retracted stably.

According to the shade device of the sixth aspect, the association mechanism is configured to control the moving amount of one sub-side rack member by the first gear member and the moving amount of the other sub-side rack member by the second gear member to differ from each other such that the main-shade-side edge of the auxiliary shade extends along the lateral edge of the main shade at the advanced location. This enables the auxiliary shade to change its position, and enables to prevent a gap between the auxiliary shade and the main shade to shield the window more reliably.

According to the shade device of the seventh aspect, a plurality of tooth portions of one sub-side rack member and a plurality of tooth portions of the other sub-side rack member are arcuately lined in a convex manner toward any one of the one sub-side rack member and the other sub-side rack member, where the any one thereof is moved more than the other thereof. This enables the auxiliary shade to change its position more smoothly.

According to the shade device of the eighth aspect, a pair of auxiliary shades are provided so as to shield both lateral sides of the main shade, and a pair of association mechanisms that respectively operate the pair of auxiliary shades to advance and retract are provided. This enables to shield the window with good appearance, correspondingly to the shapes of various windows such as a window extending toward both sides in the width direction.

According to the shade device of the ninth aspect, the auxiliary shade is formed of a light-blocking member, and thus can blend with the surrounding interior members.

### Brief Description of Drawings

FIG. 1 is an overall plan view of a shade device when a main shade is housed.
FIG. 2 is an overall plan view of the shade device when the main shade is drawn.
FIG. 3 is a perspective view showing an association mechanism.
FIG. 4 is a view showing the state of an auxiliary shade when the main shade is housed.
FIG. 5 is an enlarged view of the association mechanism in the state of FIG. 4.
FIG. 6 is a view showing the state of the auxiliary shade while the main shade is being drawn.
FIG. 7 is an enlarged view of the association mechanism in the state of FIG. 6.
FIG. 8 is a view showing the state of the auxiliary shade when the main shade is drawn.
FIG. 9 is an enlarged view of the association mechanism in the state of FIG. 8.
FIG. 10 is a plan view showing a shade device according to a modification.

### Embodiment for Carrying Out the Invention

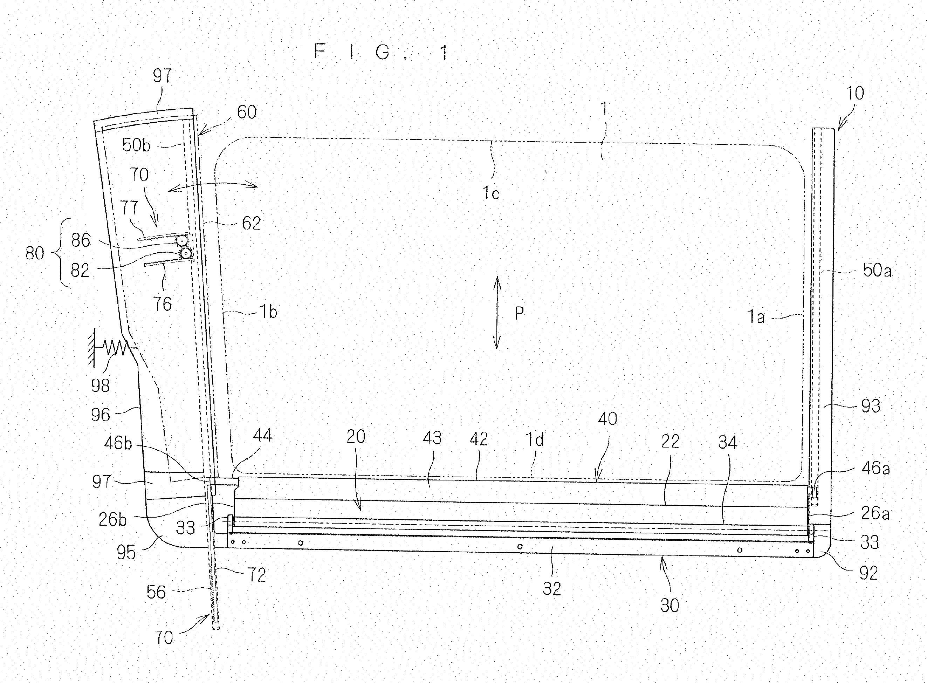

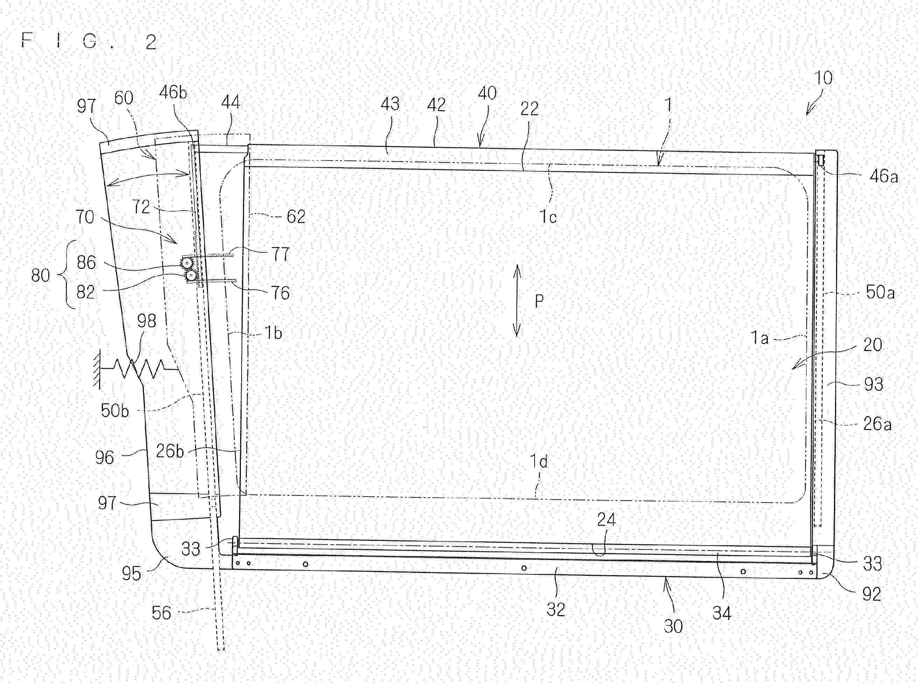

Hereinafter, a shade device 10 according to an embodiment is described (see FIGS. 1 and 2). The shade device 10 serves to shield a window 1 by a main shade 20 and an auxiliary shade 60. That is, the shade device 10 is configured such that the auxiliary shade 60 shields the portion of the window 1, which cannot be shielded by the main shade 20.

For convenience of description, the window 1 to which the shade device 10 is applied is described first.

Description is given here of an example in which the shade device 10 is applied to the window 1 being a door window provided to a slide door of an automobile. More specifically, the window 1 is formed to become wider from the floor side of the car body toward the ceiling side thereof, that is, formed into a substantially trapezoidal shape having a long side on the ceiling side and a short side on the floor side, which is surrounded by a front-side vertical frame 1a, a rear-side vertical frame 1b, a ceiling-side horizontal frame 1c, and a floor-side horizontal frame 1d. In particular, FIGS. 1 and 2 show the window 1 surrounded by the front-side vertical frame 1a substantially perpendicular to the ceiling-side horizontal frame 1c and floor-side horizontal frame 1d that are substantially parallel to each other, and the rear-side vertical frame 1b inclined toward the rear from the floor side of the car body toward the ceiling side thereof.

The shade device 10 is housed in a trim being an interior member of a door such that the main shade 20 is drawn from the floor side toward the ceiling side with respect to the window 1.

The shade device 10 includes the main shade 20, a windup device 30, a drawing member 40, guide rails 50a and 50b, an auxiliary shade 60, and an association mechanism 70.

The main shade 20 is a member that mainly covers the window 1. The main shade 20 is formed by, for example, cutting and sewing a mesh-like fabric material, resin sheet, or the like in such size and shape as to partially (in this case, the front-side portion) shield the window 1. The main shade 20 is capable of entirely shielding the window 1 together with the auxiliary shade 60 described below. Here, the front-side portion of the window 1 is a portion of the single window 1 to be shielded by the main shade 20, which shows a range of approximately rectangular shape having the short side on the floor side of the window 1 and the lateral side on the front side thereof. The main shade 20 is formed into a rectangular shape having substantially the same (here, slightly larger) width dimension as that of the short side of the window 1, correspondingly to the shape of the front-side portion of the window 1 (see FIG. 2). The portion of the window 1, which is to be shielded by the auxiliary shade 60, is referred to as a rear-side portion as opposed to the front-side portion.

Needless to say, the main shade 20 may be formed into, for example, a trapezoidal shape other than a rectangular shape as long as it is formed correspondingly to the shape of the window 1 as described above.

The main shade 20 is attached to the windup device 30 so as to be drawn therefrom and housed therein. The windup device 30 includes a base 32, rotary supports 33, and a windup shaft 34 (see FIGS. 1 and 2).

The base 32 is a member formed by, for example, cutting and bending a metal plate or a member formed by extrusion molding a metal. The base 32 may be formed of a synthetic resin. The base 32 is formed so as to be secured to a door trim, door inner panel, or the like by, for example, screwing.

The windup shaft 34 is a long cylindrical member and is supported so as to axially rotate by the pair of rotary supports 33 provided to stand on the base 32. One edge of the main shade 20 is attached to the outer peripheral surface of the windup shaft 34 along the axis direction thereof. Hereinafter, one edge of the main shade 20, which is attached to the windup shaft 34, is referred to as a housing-side edge 24, and the edge thereof, which is opposed to the housing-side edge 24, is referred to as a drawing-side edge 22. The edges of the main shade 20 that connect the drawing-side edge 22 and the housing-side edge 24 are referred to as lateral edges 26a and 26b.

The windup shaft 34 is rotatably biased against the rotary supports 33 toward the direction in which the main shade 20 is wound by a biasing member (coil spring or the like, not shown). That is, in the state in which a drawing force larger than a windup force caused by a biasing member does not act thereon, the main shade 20 is wound around the windup shaft 34 by the windup force, and is drawn from the windup shaft 34 when the drawing force larger than the windup force is applied thereon.

Here, the windup device 30 is located on the floor side of the window 1 and is disposed inside the trim that forms the floor-side horizontal frame 1d. In the trim, a slit for drawing the main shade 20 is formed along the floor-side horizontal frame 1d. The base 32 is secured to the trim, the inner panel of the door, or the like by, for example, screwing, so that the windup device 30 is supported at a location at which the main shade 20 can be drawn therefrom and housed therein through the slit.

The drawing member 40 is mounted to the drawing-side edge 22 of the main shade 20 (see FIGS. 1 and 2). The drawing member 40 is manipulated to move in the direction substantially perpendicular to the axial direction of the windup shaft 34, whereby the main shade 20 can be drawn and housed. Here, the main shade 20 is drawn along the window 1 from the floor side of the car body toward the ceiling side thereof. The direction in which the main shade 20 is drawn and housed is a drawing and housing direction P.

Description is given here of an example in which the drawing member 40 is manually manipulated to move so that the main shade 20 is drawn and housed. The configuration in which the drawing member 40 is automatically moved is described below.

The drawing member 40 is manipulated to move toward the drawing side of the drawing and housing direction P, whereby the front-side portion of the window 1 is gradually shielded from the floor side toward the ceiling side. The state in which the main shade 20 entirely shields the front-side portion is referred to as a drawn state.

In the state in which the drawing member 40 is not manipulated to move (the drawing force does not act), the main shade 20 is housed by the windup force of the windup device 30 or is kept in the state of being housed thereby. The state in which the main shade 20 is wound entirely, that is, the state in which the window 1 is not shielded is referred to as a housed state. It suffices that the configuration for locking to the drawing member 40 and restricting the main shade 20 from being wound in the housed state thereof is provided in the windup device 30, door trim, door inner panel, or the like. That is, the above-mentioned configuration serves to prevent the main shade 20 from being wound further from the housed state by the windup force of the windup device 30. For example, this configuration is preferably provided so as to be locked to the housing-side end of the drawing member 40 at a location at which the drawing member 40 is disposed in the slit.

The drawing member 40 is provided so as to move with the both ends thereof being guided by the pair of guide rails 50a and 50b described below.

The guide rails 50a and 50b are described here. The guide rails 50a and 50b are long-rod-like members in which a guide groove 52 is formed along the longitudinal direction thereof. The guide rails 50a and 50b may be formed by, for example, cutting and bending a metal plate or by extrusion molding a molten metal. Alternatively, the guide rails 50a and 50b may be formed by extrusion molding a synthetic resin.

The guide rail 50a is disposed inside the trim in front of the window 1 along the front-side vertical frame 1a. That is, the guide rail 50a is disposed along the drawing and housing direction P and is positioned to be substantially parallel to the lateral edge 26a on one side (front side of the car body) of the main shade 20 in the drawn state. Here, the guide rail 50a is secured to a support member 93 coupled to one lateral end (lateral end located on the front side of the car body) of the base 32 of the windup device 30 via a side bracket 92. The support member 93 is formed into a long plate shape and is disposed along the front-side vertical frame 1a inside the trim in front of the window 1 or as a part of the trim. Note that the surface of the support member 93 may be formed of the same material or the same type of material as that of the surrounding interior member in a case where the support member 93 is disposed as a part of the trim.

Meanwhile, the guide rail 50b is disposed along the rear-side vertical frame 1b inside the trim behind the window 1. Here, the guide rail 50b is secured to a support member 96 coupled to the other lateral end (lateral end located on the rear side of the car body) of the base 32 of the windup device 30 via a side bracket 95. The support member 96 is a member that is formed into a long plate shape that becomes narrower gradually or stepwise from wide one end side (ceiling side) toward the other end side (floor side), in which auxiliary guide portions 97 described below are provided at both ends thereof. The support member 96 is disposed along the rear-side vertical frame 1b inside the trim behind the window 1. Provided on one main surface of the support member 96 is a conversion mechanism 80 of the association mechanism 70 described below.

Needless to say, the pair of guide rails 50a and 50b may be each secured directly to the trim, door inner panel, or the like in front of and behind the window 1.

As described above, the pair of guide rails 50a and 50b are provided so as to have a gradually increasing distance therebetween from the floor side toward the ceiling side along the front-side vertical frame 1a and the rear-side vertical frame 1b. Meanwhile, the main shade 20 is manipulated to move along the drawing and housing direction P, and thus, the drawing member 40 mounted to the drawing-side edge 22 of the main shade 20 is configured to change a dimension in the longitudinal direction thereof so as to move correspondingly to the distance between the pair of guide rails 50a and 50b. The drawing member 40 includes a stay 42 and a pair of runners 46a and 46b provided at both ends thereof.

The stay 42 is formed into a long rod shape and is configured so as to extend and retract in the longitudinal direction thereof. The stay 42 includes a main body 43 and an advancing and retracting portion 44. The main body 43 is a long cylindrical member or a long member including a cylindrical portion on one end side and is secured to the drawing-side edge 22 of the main shade 20. More specifically, the main body 43 has a longitudinal dimension set to be substantially the same as that of the drawing-side edge 22 of the main shade 20 and extends over the entire drawing-side edge 22. The runner 46a is coupled to one end of the main body 43.

The advancing and retracting portion 44 is a rod-like member whose one end portion is inserted, from the other end of the main body 43, into the main body 43 so as to advance and retract in the longitudinal direction thereof. The runner 46b is coupled to the other end of the advancing and retracting portion 44.

The runners 46a and 46b are portions guided by the guide rails 50a and 50b, respectively. That is, the runners 46a and 46b coupled to the both ends of the stay 42 are guided by the guide rails 50a and 50b, respectively, so that the stay 42 is extended and retracted correspondingly to the distance between the guide rails 50a and 50b along with the operation of drawing and housing the main shade 20.

The runners 46a and 46b are fitted into the guide rails 50a and 50b so as to move along the longitudinal direction, respectively. More specifically, the runners 46a and 46b are formed so as to be housed in the guide grooves 52 of the guide rails 50a and 50b, respectively, and the outer cross-sectional shape thereof is set to be smaller (here, slightly smaller) than the inner cross-sectional shape of the guide groove 52. That is, the runners 46a and 46b move in the guide grooves 52 to be guided along the extending direction of the guide rail 50a.

Here, the stay 42 is manipulated to move in the drawing and housing direction P in the state in which one end of the main body 43 coupled with the runners 46a and 46b and the other end of the advancing and retracting portion 44 are extended through the openings of the guide grooves 52 of the guide rails 50a and 50b, respectively. Accordingly, when the main body 43 is moved in the direction in which the distance between the guide rails 50a and 50b becomes larger, the runner 46b gradually moves away from the main body 43 and the advancing and retracting portion 44 advances from the main body 43, whereby the stay 42 is extended (see FIG. 2). Meanwhile, when the main body 43 is moved in the direction in which the distance between the guide rails 50a and 50b becomes smaller, the runner 46b gradually approaches the main body 43 and the advancing and retracting portion 44 retracts into the main body 43, whereby the stay 42 is retracted (see FIG. 1).

For example, the drawing member 40 may be configured by combining an integrated member formed of the main body 43 and the runner 46a through injection molding and an integrated member formed of the advancing and retracting portion 44 and the runner 46b through injection molding. Alternatively, the drawing member 40 may be configured by combining the main body 43, the advancing and retracting portion 44, and the pair of runners 46a and 46b that are formed by injection molding as discrete members.

The drawing member 40 may be configured such that its movement is regulated on the housing side of the drawing and housing direction P in the drawn state of the main shade 20. For example, the configuration in which the main body 43 can be hooked or the configuration in which the pair of runners 46a and 46b are held at the tips of the guide rails 50a and 50b can be adopted as such a configuration.

Needless to say, the drawing member 40 is not limited to the above-mentioned configuration. It suffices that the main body and the advancing and retracting part can be extended and retracted in the longitudinal direction over the entire stay, which may be members fitted into each other in a concavo-convex manner so as not to move relative thereto in a direction perpendicular to the longitudinal direction. The pair of runners may be coupled to both ends of the stay so as to rotate relative thereto. Further, the advancing and retracting parts may be provided on both sides of the main body 43 and the pair of runners may be respectively coupled to the pair of advancing and retracting parts.

In a case where the windup device 30 is disposed inside the trim on the short-edge side of the window 1 as described above, in some cases, it is difficult to dispose the wider windup device 30 wider than the short side to the short side in terms of door space. The shade device 10 adopts the main shade 20 corresponding to the short side of the window 1 (having approximately the same width dimension), which causes a portion lateral to the main shade 20, in which the window 1 cannot be shielded. Therefore, as to the single window 1 to be shielded, the shade device 10 is configured to shield the portion lateral to the main shade 20 by the auxiliary shade 60.

The auxiliary shade 60 is formed so as to shield, of the window 1, the portion (rear portion of the window 1) lateral to the portion shielded by the main shade 20 (see FIG. 2). That is, the auxiliary shade 60 is a member formed so as to shield the window 1 entirely together with the main shade 20.

More specifically, the auxiliary shade 60 is formed into such size and shape as to shield the rear portion of the window 1 and is formed into a flat shape so as to be disposed along the main shade 20 in the drawn state. Here, the auxiliary shade 60 is formed into a shape to become narrower gradually (or stepwise) from one edge (ceiling side) having a large width toward the other edge (floor side), correspondingly to the rear portion having a substantially triangular shape. The surface side portion of the auxiliary shade 60, which faces the inside of the car room, is formed into a smooth flat shape or curved shape (curved shape to extend along the main shade 20 in the drawn state or interior member).

The auxiliary shade 60 includes a main-shade-side edge 62 having a shape (here, linear shape) corresponding to the shape of the lateral edge 26b of the main shade 20. The auxiliary shade 60 shields the rear portion of the window 1 in such a manner that the main-shade-side edge 62 extends along the lateral edge 26b of the main shade 20 in the drawn state. Here, the manner in which the main-shade-side edge 62 extends along the lateral edge 26b of the main shade 20 refers to a manner that the main-shade-side edge 62 of the auxiliary shade 60 overlaps the lateral edge 26b in a direction perpendicular to the window 1, or a manner that the main-shade-side edge 62 of the auxiliary shade 60 faces the lateral edge 26b (here, the former).

The auxiliary shade 60 has a light shielding property. That is, a pair of sub-side rack members 76 and 77 described below are provided in the back-side portion of the auxiliary shade 60, and thus, the auxiliary shade 60 is formed of a light-blocking member to prevent the pair of sub-side rack members 76 and 77 from being viewed from the interior of the car. Further, the auxiliary shade 60 may be formed of the same or same type of material as that of the interior member such that the surface thereof blends with the interior members around the winnow 1.

Here, the auxiliary shade 60 is configured by covering a plate-like member obtained by molding a synthetic resin or the like with a light-shielding sheet member. Needless to say, the auxiliary shade 60 may be configured by covering a frame-like member with a sheet member or may be the plate-like member per se. It suffices that a plate-like member is used for portions of the auxiliary shade 60, where the pair of sub-side rack members 76 and 77 are provided. As described above, the auxiliary shade 60 is formed into such a shape as to independently shield the rear portion of the window 1, whereby a windup device is not required and the structure can be made simple differently from the case of a sheet-like member.

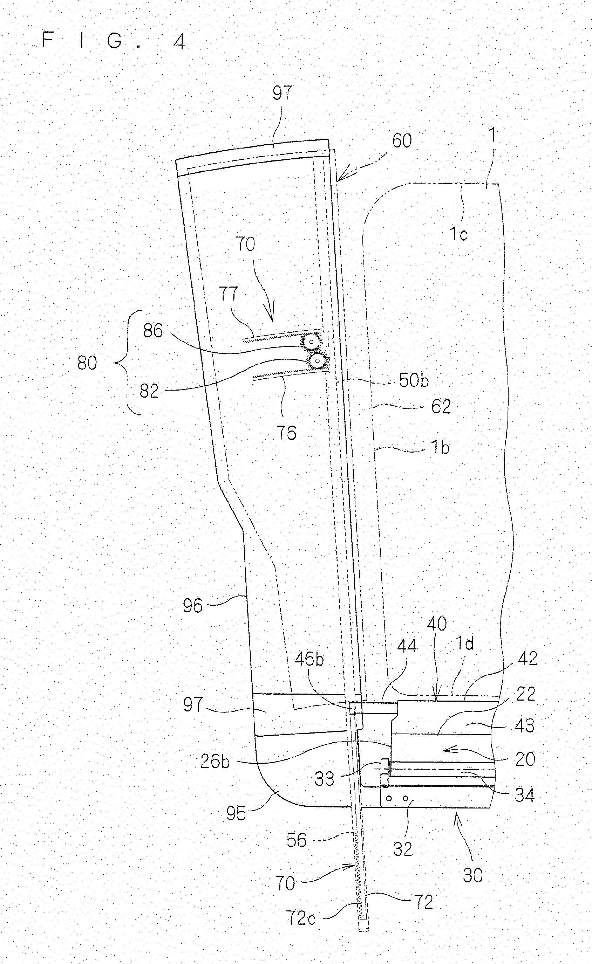

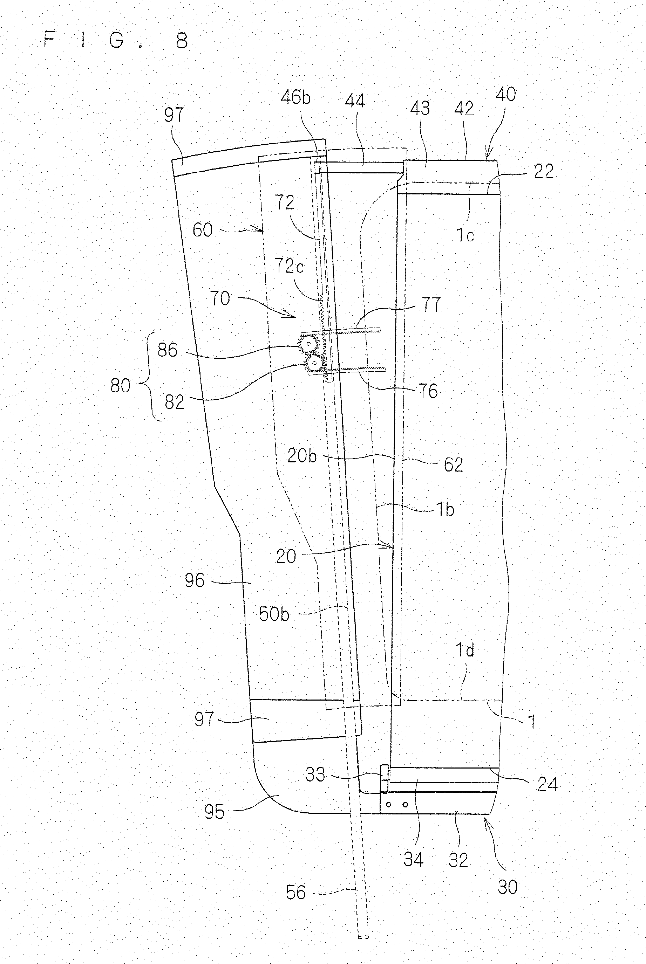

The auxiliary shade 60 is provided so as to move between an advanced location for shielding the rear portion of the window 1 (see FIGS. 2 and 8) and a retracted location for retracting from the advanced location (see FIGS. 1 and 4). Here, the advanced location of the auxiliary shade 60 is a location at which the auxiliary shade 60 overlaps the rear portion of the window 1 with a distance in the interior of the car, while the retracted location is a location at which the auxiliary shade 60 is housed in the trim behind the window 1. It suffices that the auxiliary shade 60 is disposed in such a position that the main-shade-side edge 62 extends along the lateral edge 26b such that the distance between the main shade 20 and the auxiliary shade 60 is made small at the advanced location. In addition, it suffices that the auxiliary shade 60 is disposed in such a position that the main-shade-side edge 62 extends along the rear-side vertical frame 1b at the retracted location such that the housing space within the trim behind the window 1 can be made as small as possible.

The auxiliary shade 60 is provided so as to advance and retract in such a manner that the locations of one end and the other end thereof are regulated by the auxiliary guide portions 97 disposed in the rear-side vertical frame 1b. More specifically, the auxiliary guide portions 97 are formed so as to mainly regulate the auxiliary shade 60 to be located inside and outside the window 1. The advancing and retracting auction of the auxiliary shade 60 along the window 1 on the surface thereof is performed by the association mechanism 70 described below, where the auxiliary guide portions 97 are portions that regulate the location of the auxiliary shade 60 in a secondary manner.

More specifically, the auxiliary guide portions 97 are formed as a pair of groove portions provided at both ends of the support member 96. The groove width of the auxiliary guide portion 97 is set to be larger (here, slightly larger) than the width dimension of each edge of the auxiliary shade 60. The location of the auxiliary shade 60 is regulated inwardly and outwardly with respect to the window 1 in the state in which the edges of the auxiliary shade 60 are disposed in the pair of groove portions of the auxiliary guide portions 97.

The auxiliary shade 60 is operated to advance and retract by the association mechanism 70. That is, the association mechanism 70 is configured to operate the auxiliary shade 60 to advance and retract in a direction different from the drawing and housing direction P of the main shade 20, in association with the operation of drawing and housing the main shade 20. More specifically, the association mechanism 70 operates the auxiliary shade 60 to advance and retract such that it is located at the advanced location in the drawn state of the main shade 20 and is located at the retracted location in the housed state of the main shade 20.

The association mechanism 70 is configured so as to convert the operation of moving the drawing member 40 in the drawing and housing direction P into the operation of moving the auxiliary shade 60 in the advancing and retracting direction. Here, the auxiliary shade 60 is mainly moved to advance and retract in a direction substantially perpendicular to the drawing and housing direction P, that is, substantially in the front and back direction of the car body.

Here, the association mechanism 70 is configured to operate the auxiliary shade 60 to advance and retract while changing the position thereof such that the main-shade-side edge 62 extends along the lateral edge 26b of the main shade 20 at the advanced location. That is, as described above, it suffices that the auxiliary shade 60 is operated to advance and retract such that the main-shade-side edge 62 is positioned to extend along the rear-side vertical frame 1b at the retracted location and the main-shade-side edge 62 is positioned to extend along the lateral edge 26b of the main shade 20 at the advanced location. For this reason, the auxiliary shade 60 is moved in the direction substantially perpendicular to the drawing and housing direction P and is changed to be in a position different between the retracted location and the advanced location while extending along the window 1 (that is, is inclined).

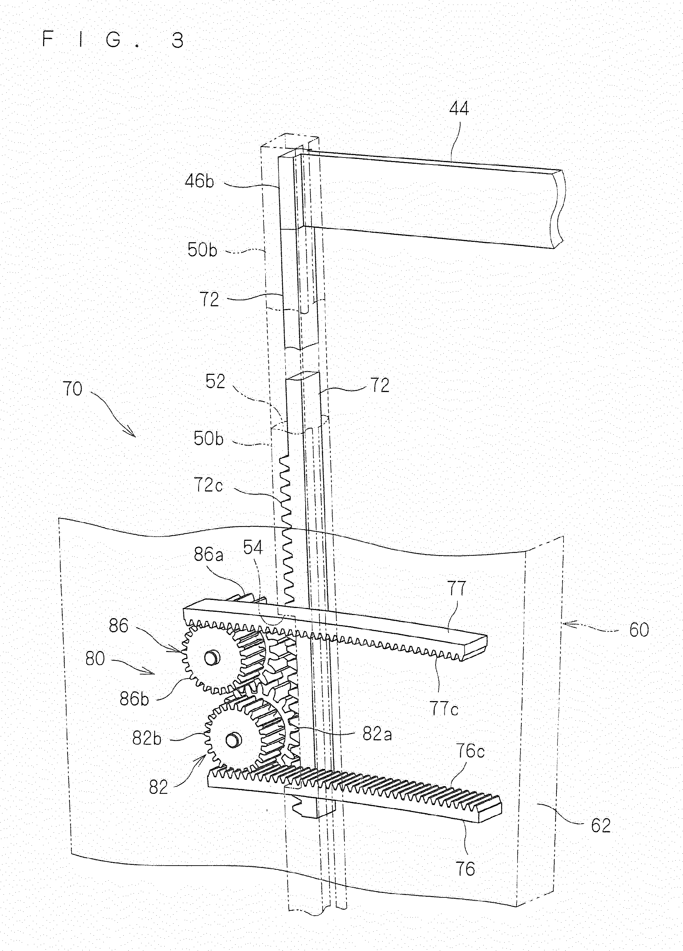

Hereinafter, a specific configuration of the association mechanism 70 is described. The association mechanism 70 includes a main-side rack member 72, a pair of sub-side rack members 76 and 77, and a conversion mechanism 80 (see FIG. 3).

The main-side rack member 72 is coupled to the runner 46b being the end portion of the drawing member 40. More specifically, the main-side rack member 72 is formed to extend toward the housing side of he drawing and housing direction P along the moving direction of the runner 46b, that is, along the guide rail 50b. The main-side rack member 72 is capable of moving within the guide groove 52 of the guide rail 50b together with the runner 46b. Here, the main-side rack member 72 is formed into a long plate shape, where a plurality of tooth portions 72c are provided in the tip-side portion in the longitudinal direction thereof. The plurality of tooth portions 72c are formed to project toward the rear side of the car body and are provided to be lined in the iongitudinal direction of the main-side rack member 72.

As described above, the main-side rack member 72 is provided to extend on the housing side (floor side) with respect to the drawing member 40. Accordingly, the guide rail 50b includes a rack housing portion 56 capable of housing the main-side rack member 72 located in the housed state of the main shade 20. Here, the guide rail 50b is formed to extend more toward the housing side than the guide rail 50a, and the extending portion thereof is the rack housing portion 56. While the rack housing portion 56 extends linearly here, in a case where the main-side rack member 72 is formed of a flexible member such as a resin, the rack housing portion 56 may be formed to be inclined or curved with respect to the extending direction of the guide rail 50b. Needless to say, the rack housing portion 56 may be omitted.

The pair of sub-side rack members 76 and 77 are members formed such that a plurality of tooth portions 76c and 77c are lined in the longitudinal direction on main surfaces of long plate like members, respectively. The pair of sub-side rack members 76 and 77 are provided in the exterior of the car in the auxiliary shade 60 in such a manner of extending along the advancing and retracting direction of the auxiliary shade 60. More specifically, the pair of sub-side rack members 76 and 77 are provided to the auxiliary shade 60 in parallel with a distance therebetween in a position in which the plurality of tooth portions 76c and 77c that are lined therealong are opposed to each other. Here, the pair of sub-side rack members 76 and 77 are disposed to be opposed to each other with a distance therebetween in the longitudinal direction of the auxiliary shade 60. The sub-side rack member 77 and sub-side rack member 76 are provided on one edge side and the other edge side of the auxiliary shade 60, respectively.

The conversion mechanism 80 is formed so as to convert the operation of moving the main-side rack member 72 into the operations of moving the sub-side rack members 76 and 77. That is, the conversion mechanism 80 is a mechanism that transmits the moving force of the main-side rack member 72 as moving forces of the sub-side rack members 76 and 77. The conversion mechanism 80 includes a first gear member 82 and a second gear member 86 and is provided in the interior of the car with respect to the support member 96. The first gear member 82 is a member that converts the operation of moving the main-side rack member 72 into the operation of moving the sub-side rack member 76. Meanwhile, the second gear member 86 is a member that converts the operation of rotating the first gear member 82 into the operation of moving the sub-side rack member 77. That is, in the explanation from the viewpoint of the transmission of forces, the first gear member 82 transmits the moving force of the main-side rack member 72 as the moving force of the sub-side rack member 76, and the second gear member 86 transmits the rotational force of the first gear member 82 as the moving force of the sub-side rack member 77.

The association mechanism 70 is configured to change the position of the auxiliary shade 60 by a difference provided in the moving amount between one end and the other end of the auxiliary shade 60. Here, the rear-side vertical frame 1b is inclined backward toward the upper portion of the car body with respect to the lateral edge 26b of the main shade 20 extending along the drawing and housing direction P (that is, the distance between the lateral edge 26b and the rear-side vertical frame 1b becomes larger as closer to the upper side of the car body). Therefore, one edge of the auxiliary shade 60 is moved more (faster) than the other edge thereof, whereby the one edge is inclined toward the main shade 20.

More specifically, the association mechanism 70 is configured such that the sub-side rack member 77 is moved more than the sub-side rack member 76 by the conversion mechanism 80.

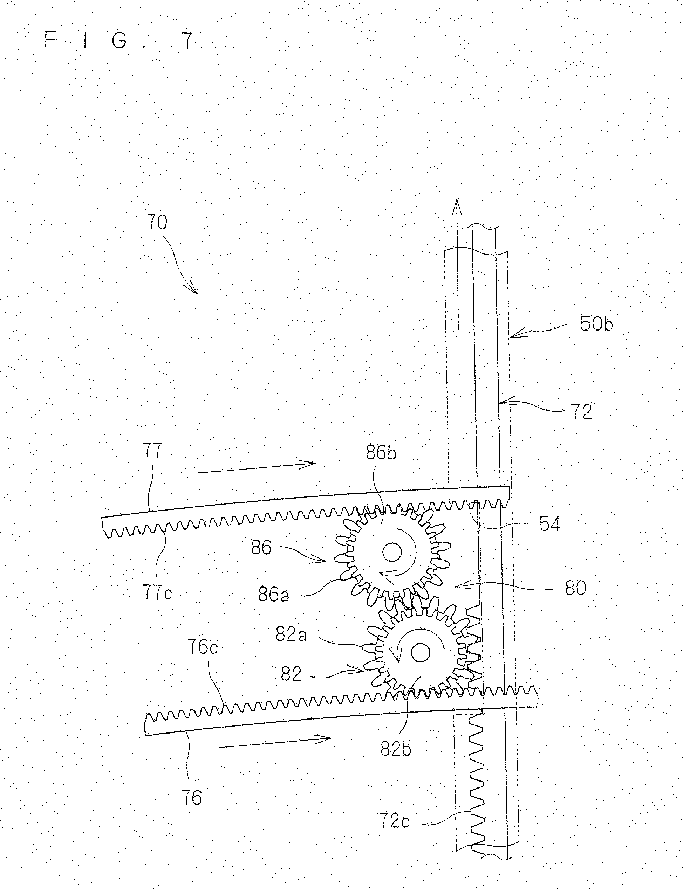

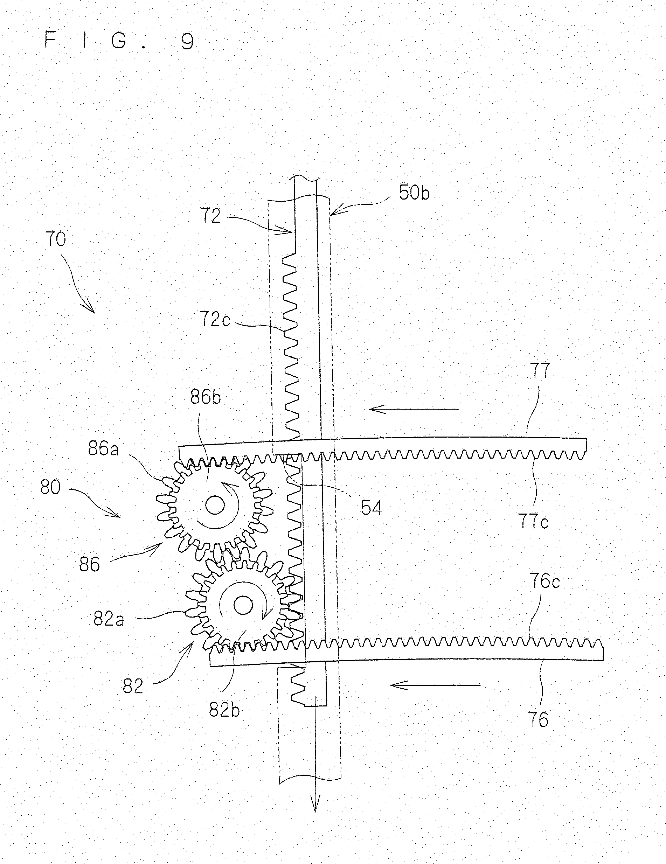

The first gear member 82 includes a gear 82a being a spur gear meshable with the main-side rack member 72 and a gear 82b being a spur gear that meshes with the sub-side rack member 76. Here, the first gear member 82 is formed into a shape in which the gear 82a and the gear 82b are coupled to each other so as not to rotate relative thereto with the rotation axes thereof coinciding with each other. The first gear member, 82 is rotatably provided, with the shaft member serving as a rotational axis being supported by the support member 96 in a position of being substantially perpendicular to the window 1. The first gear member 82 is provided in a position in which the gear 82b is located in the interior of the car with respect to the gear 82a. The sub-side rack member 76 that meshes with the gear 82b can intersect the guide rail 50b in the interior of the car in the advancing and retracting operation of the auxiliary shade 60 (see FIGS. 7 and 9).

As described above, the gear 82a is provided so as to mesh with the main-side rack member 72. Here, an opening 54, in which at least the tooth portions 72c of the main-side rack member 72 can be exposed toward the conversion mechanism 80 side (here, rear side of the car body), is formed in a part in the longitudinal direction of the guide rail 50b such that the gear 82a can mesh with the main-side rack member 72 that slides within the guide rail 50b (see FIG. 3). That is, the first gear member 82 is supported by the support member 96 such that the gear 82a can mesh with the main-side rack member 72 through the opening 54.

The second gear member 86 includes a gear 86a being a spur gear that meshes with the gear 82a of the first gear member 82 and a gear 86b being a spur gear that meshes with the sub-side rack member 77. Here, the second gear member 86 is formed into a shape in which the gear 86a and the gear 86b are coupled so as not to rotate relative thereto with the rotational axes thereof coinciding with each other. The shaft member of the second gear member 86 is supported by the support member 96 similarly to the first gear member 82. The second gear member 86 is provided in a position in which the gear 86b is located in the interior of the car with respect to the gear 86a. The sub-side rack member 77 that meshes with the gear 86b can intersect the guide rail 50b in the interior of the car in the advancing and retracting operation of the auxiliary shade 60. The location at which the second gear member 86 is supported is a location at which the gear 86a meshes with the gear 82a and does not mesh with the main-side rack member 72 (see FIG. 9).

The association mechanism 70 is configured in such a manner that the main-shade-side edge 62 of the auxiliary shade 60 extends along the lateral edge 26b of the main shade 20 at the advanced location such that the moving amount of the sub-side rack member 77 by the second gear member 86 is larger than the moving amount of the sub-side rack member 76 by the first gear member 82.

The relationships among the gears 82a, 82b, 86a, and 86b according to the present embodiment are described.

The gear 82a and gear 86a have the same number of teeth and the same pitch (same pitch as that of the main-side rack member 72). That is, in the gear 82a and the gear 86a, the operation of moving the main-side rack member 72 is converted into the operation of rotating the gear 86a without acceleration and deceleration.

The gear 82a and gear 82b of the first gear member 82 are set to have different pitch circle diameters (here, different number of teeth and different pitch). More specifically, the gear 82b that meshes with the sub-side rack member 76 is set to have a smaller pitch circle diameter (here, a larger number of teeth and a smaller pitch) than that of the gear 82a that meshes with the main-side rack member 72 such that the operation of moving the main-side rack member 72 is decelerated and that operation is converted into the operation of moving the sub-side rack member 76.

Similarly in the second gear member 86, the gear 86b that meshes with the sub-side rack member 77 is set to have a smaller pitch circle diameter (here, a larger number of teeth and a smaller pitch) than that of the gear 86a that meshes with the gear 82a. Note that the change gear ratio by the gear members 82 and 86 between the operation of moving the main-side rack member 72 and each of the operations of moving the sub-side rack members 76 and 77 may be determined in consideration of the force required for drawing the main shade 20 for operating the auxiliary shade 60 to advance and retract. Here, in order to reduce the force required for drawing the main shade 20 as much as possible, the operation of moving the main-side rack member 72 is decelerated to be converted into the operations of moving the sub-side rack members 67 and 77.

The gear 82b and the gear 86b are set to have the same pitch and a different number of teeth (that is, different pitch circle diameter). More specifically, the gear 86b that meshes with the sub-side rack member 77 is set to have a larger number of teeth (that is, larger pitch circle diameter) than that of the gear 82b that meshes with the sub-side rack member 76 for moving the sub-side rack member 77 more than the sub-side rack member 76. That is, the gear 82a and the gear 86a have the same shape, and thus, a difference in moving amount between the sub-side rack member 76 and the sub-side rack member 77 is determined by a pitch circle diameter ratio between the gear 82b and the gear 86b.

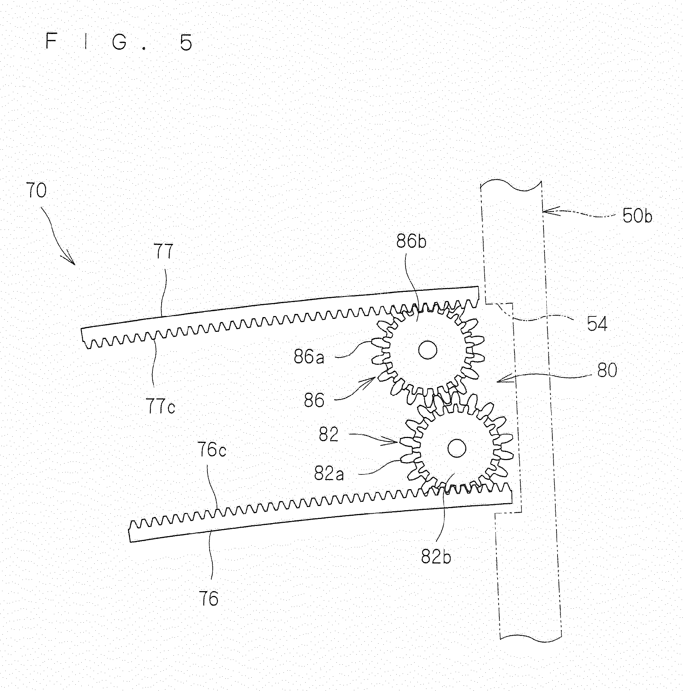

The pair of sub-side rack members 76 and 77 are formed such that the plurality of tooth portions 76c and 77c are lined into corresponding arcuate shapes (see FIGS. 5, 7, and 9). Here, the corresponding arcuate shapes refer to arcuate shapes having the same center of curvature, that is, the plurality of tooth portions 76c and the plurality of tooth portions 77c are lined along the arcs of curvature having the same center of curvature and a different radius of curvature. Here, the pair of sub-side rack members 76 and 77 are formed such that the tooth portions 76c and 77c are arcuately lined in a convex manner toward the sub-side rack member 77 (one edge of the auxiliary shade 60) that is moved more than the sub-side rack member 76, and are formed into an arcuate plate shape as a whole.

That is, the sub-side rack member 77 is moved more than the sub-side rack member 76, and thus, the association mechanism 70 is configured to reliably keep the meshing between the pair of sub-side rack members 76 and 77 and the gear members 82 and 86 even if the position of the auxiliary shade 60 is changed. It is preferable that the pair of sub-side rack members 76 and 77 be moved, around the axes of the centers of curvature of the arcuate lines in which the plurality of tooth portions 76c and 77c are lined, along the arcuate lines, respectively. In other words, it suffices that in the conversion mechanism 70, the gears 82b and 86b are set to have pitch circle diameters corresponding to the radius of curvature ratio between the pair of sub-side rack members 76 and 77 (a ratio closer to the above-mentioned ratio is preferred, and ideally, equal ratio).

The reason why the pitches of the gears 82b and 86b are made smaller than those of the gears 82a and 86a is that the radius of curvature ratio between the pair of sub-side rack members 76 and 77 and the pitch circle diameter ratio between the gears 82b and 86b are made to be as close to each other as possible, as described above. That is, the pitch circle diameter can be set more finely as the pitch of the gear becomes smaller.

The radii of curvature of the arcuate lines in which the plurality of tooth portions 76c and the plurality of tooth portions 77c are lined may be determined in consideration of, for example, the manner of the operation of the auxiliary shade 60, the change gear ratio between the gear 82b and gear 86b, pitch and the number of teeth of the pair of sub-side rack members 76 and 77, and the position in which the pair of sub-side rack members 76 and 77 are disposed with respect to the auxiliary shade 60 such that the auxiliary shade 60 changes its position in a desired manner.

The auxiliary shade 60 is held at the advanced and retracted locations and in the positions corresponding to the above-mentioned locations in the state in which the pair of sub-side rack members 76 and 77 mesh with the gear 82b and gear 86b, respectively.

Here, the relationship between the main-side rack member 72 and the conversion mechanism 80 is described. The main-side rack member 72 is only required to transmit the moving force of the operation of drawing and housing the main shade 20 to the conversion mechanism 80, and is formed to mesh with the gear 82a in a part or the whole of the main shade 20 between the housed state and the drawn state.

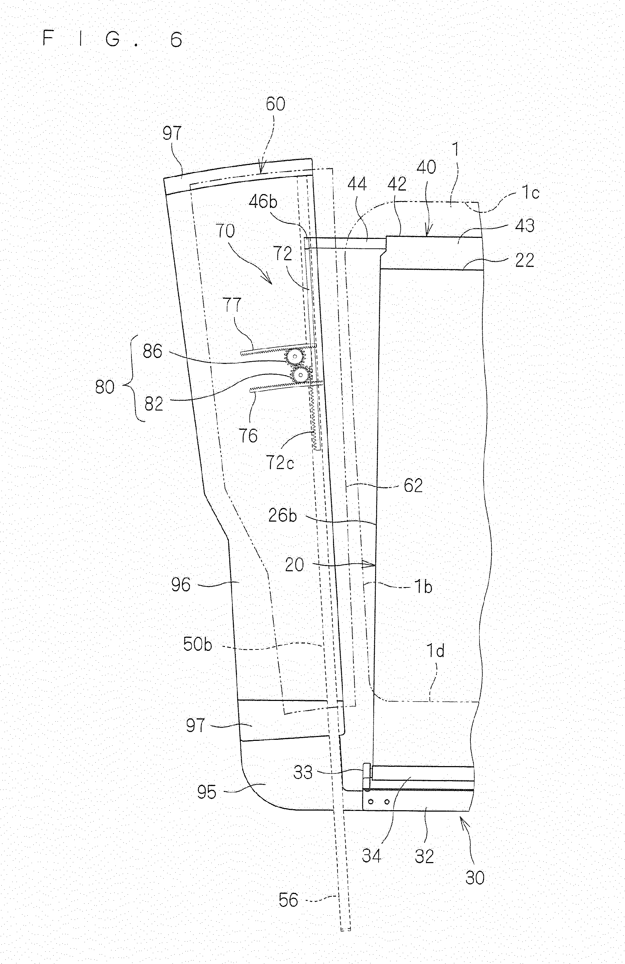

Here, the auxiliary shade 60 is designed to advance in the latter half of the manipulation of drawing the main shade 20 from the housed state to the drawn state. That is, the main-side rack member 72 is designed so as to start meshing with the gear 82a at a location at which the drawing member 40 is moved toward the ceiling from the half of the window 1 (In FIG. 6, location about one-tenth of the window 1 away toward the ceiling). That is, in the housed state of the main shade 20 and during midway of the operation of drawing the main shade 20, the auxiliary shade 60 is kept at the retracted location in the state where the main-side rack member 72 does not mesh with the gear 82a (see FIGS. 4 and 5). The main-side rack member 72 is designed to mesh with the gear 82a after meshing with the gear 82a during midway of the operation of drawing the main shade 20 until the main shade 20 is completely drawn and also in the drawn state of the main shade 20 (see FIGS. 6 to 9). That is, in the drawn state of the main shade 20, the auxiliary shade 60 is kept at the advanced location through meshing between the main-side rack member 72 and the gear 82a.

In order to regulate the operation of advancing and retracting the auxiliary shade 60 in the state in which the main-side rack member 72 does not mesh with the gear 82a, an advancement regulating member 98 that keeps the auxiliary shade 60 at the retracted location is provided. The advancement regulating member 98 is formed so as to bias the auxiliary shade 60 toward the retracted location. For example, as shown in FIGS. 1 and 2, a tension spring (coil spring) that biases the auxiliary shade 60 toward the retracted location can be adopted as the advancement regulating member 98. It suffices that the advancement regulating member 98 is provided to stretch between the rear lateral edge of the auxiliary shade 60 and the inner portion of the trim on the rear side of the window 1.

Alternatively, a tension spring that biases the sub-side rack member 76 or the sub-side rack member 77 toward the retracted location, a power spring that rotatively biases the first gear member 82 or the second gear member 86, or the like can be adopted as the advancement regulating member.

Next, the operation of the shade device 10 according to the embodiment is described.

First, the operation of shielding the window 1 is described. The main shade 20 is housed as initial state (see FIGS. 1, 4, and 5).

First, the drawing member 40 is manipulated toward the drawing side of the drawing and housing direction P to draw the main shade 20. Accordingly, the main-side rack member 72 coupled to the runner 46b also passes through the guide rail 50b and slides toward the drawing side. At a stage when the drawing member 40 is started to be drawn, the main-side rack member 72 does not mesh with the gear 82a, and the auxiliary shade 60 is biased toward the retracted location by the advancement regulating member 98 and is kept to be located at the retracted location.

Further, the drawing member 40 is manipulated toward the drawing side such that the drawing member 40 is moved up to the location at which the tooth portions 72c of the main-side rack member 72 mesh with the gear 82a, whereby the force of moving the main-side rack member 72 toward the drawing side is transmitted to the conversion mechanism 80 (see FIGS. 6 and 7). That is, the first gear member 82 is rotated through the meshing between the main-side rack member 72 and the gear 82a. Then, the sub-side rack member 76 that meshes with the gear 82b is conveyed toward the advancing side of the auxiliary shade 60. In addition, the second gear member 86 is rotated through the meshing between the gear 82a and the gear 86a. Then, the sub-side rack member 77 that meshes with the gear 86b is conveyed toward the advancing side of the auxiliary shade 60 more than the sub-side rack member 76. As a result, the auxiliary shade 60 moves to advance in an arcuate path while changing its position. In FIG. 7, arrows show the operations of the portions of the association mechanism 70 when the auxiliary shade 60 is operated to advance.

Then, the drawing member 40 is moved until the main shade 20 enters the drawn state, whereby the auxiliary shade 60 moves to the advanced location and is positioned such that the main-shade-side edge 62 extends along the lateral edge 26b of the main shade 20 (see FIGS. 8 and 9). The tooth portions 72c of the main-side rack member 72 and the gear 82a remain meshing with each other in this state, and the auxiliary shade 60 is kept at the advanced location in the state in which the drawing member 40 is not moved.

Accordingly, the window 1 is entirely shielded by the main shade 20 and the auxiliary shade 60 (see FIG. 2).

Next, the operation of releasing the shielded state of the window 1 is described. First, the drawing member 40 is manipulated toward the housing side of the drawing and housing direction P for housing the main shade 20. The main shade 20 is wound by the windup force of the windup device 30 in this housing.

The main-side rack member 72 coupled to the drawing member 40 is moved along with the operation above, whereby the gear 82a that meshes with the main-side rack member 72 is rotated. Then, the first gear member 82 is rotated, and the sub-side rack member 76 that meshes with the gear 82b is conveyed toward the retracting side of the auxiliary shade 60. In addition, the second gear member 86 is rotated through the meshing between the gear 82a and the gear 86a, whereby the sub-side rack member 77 that meshes with the gear 86b is conveyed toward the retracting side of the auxiliary shade 60 more than the sub-side rack member 76. Accordingly, the auxiliary shade 60 moves to retract while changing its position. In FIG. 9, arrows show the operations of the portions of the association mechanism 70 when the auxiliary shade 60 moves to retract.

The drawing member 40 is further manipulated toward the housing side and the main-side rack member 72 is moved up to the location at which the tooth portions 72c become detached from the gear 82a (meshing is released), and then, the auxiliary shade 60 moves to the retracted location such that the main-shade-side edge 62 is positioned to extend along the rear-side vertical frame 1b. That is, the rear portion of the window 1 is not shielded. The auxiliary shade 60 is kept at the retracted location by the biasing force of the advancement regulating member 98 in this state.

Then, when the drawing member 40 is moved until the main shade 20 enters the housed state, the forward portion of the window 1 is not shielded, so that the window 1 is entirely exposed (see FIG. 1). In the housed state of the main shade 20, the main-side rack member 72 is housed in the rack housing portions 56 of the guide rail 50b.

The association mechanism 70 has been described by way of the example in which the main shade 20 is drawn for a half or more part thereof and then the auxiliary shade 60 moves to advance. Alternatively, for example, the timing at which the auxiliary shade 60 is operated to advance can be changed by adjusting the location of the tooth portions 72c of the main-side rack member 72 with respect to the runner 46b, the dimension in the parallel direction thereof, and the location of the conversion mechanism 80. For example, in a case where the auxiliary shade 60 is moved to advance from immediately after the main shade 20 is drawn until the main shade 20 is completely drawn, it suffices that the conversion mechanism is provided at such a location that the main-side rack member meshes therewith immediately after the main-side rack member moves and that the tooth portions of the main-side rack member are longitudinally formed to have such a dimension as to continue meshing with the gear of the conversion mechanism until the main shade is completely drawn.

The association mechanism 70 may be configured to move the auxiliary shade 60 to the advanced location immediately after the main shade 20 is started to be drawn and to move the auxiliary shade 60 to the retracted location immediately before the main shade 20 is completely housed. That is, the configuration may be made such that the main-side rack member meshes with the gear of the conversion mechanism at the location of the housed state of the main shade 20 and the location when the main shade 20 is started to be drawn. In the case where this configuration is adopted, the retraction regulating member that biases the auxiliary shade 60 toward the advanced location may be provided in the state in which the main-side rack member and the gear of the conversion mechanism do not mesh with each other. Accordingly, from the location in the housed state of the main shade 20 to the location at which the main shade 20 is started to be drawn, the advancement and retracted locations of the auxiliary shade 60 are determined in accordance with the location of the drawing member 40 through the meshing between the main-side rack member and the gear of the conversion mechanism. Then, the auxiliary shade 60 is kept at the advanced location by the biasing force of the retraction regulating member after the meshing between the main-side rack member and the gear is released until the main shade 20 enter the drawn state. Note that the speed of the advancing and retracting movement may be adjusted in accordance with the deceleration ratio of the gears of the conversion mechanism.

The association mechanism may be configured so as to cause the auxiliary shade 60 to move toward the other edge side than one edge side and change its position, depending on the shapes of the window 1 and the main shade 20. To explain a more specific example regarding this configuration, it is preferable that the association mechanism be configured such that the second gear member 86 moves the sub-side rack member 77 by a smaller amount compared with the case in which the first gear member 82 moves the sub-side rack member 76 in such a manner that the main-shade-side edge 62 of the auxiliary shade 60 extends along the lateral edge 26b of the main shade 20. Then, it is preferable that a pair of sub-side rack members include a plurality of tooth portions arcuately lined in a convex manner toward the other edge side of the auxiliary shade 60, correspondingly to this association mechanism.

A pair of sub-side rack members of the association mechanism 70 may include a plurality of tooth portions linearly lined. That is, in a case where the advancing and retracting distance of the auxiliary shade 60 is small, the meshing states between the pair of sub-side rack members and the gear members are kept even if the other sub-side rack member is moved more than the one sub-side rack member. In a case where the rear portion of the window 1 can be shielded by merely moving the auxiliary shade 60 in a parallel manner, the pair of sub-side rack members do not need to be formed to include a plurality of tooth portions arcuately lined.

While the description has been given of the example in which the pair of sub-side rack members 76 and 77 of the auxiliary shade 60 are provided, only one sub-side rack member may be provided. That is, in a case where the auxiliary shade 60 is guided so as to move in a given path by the auxiliary guide portion 97, the configuration for holding the auxiliary shade 60 by the association mechanism 70 can be omitted. In this case, the second gear member 86 may be omitted as well.

The configuration below is adoptable as the configuration for moving the auxiliary shade 60 to advance and retract in an arcuate path. For example, the following configuration is adoptable as another association mechanism. One or two sub-side rack members that rotatably support the auxiliary shade 60 around the axis substantially perpendicular to the window 1 and include a plurality of tooth portions lined in an arcuate shape with the radius of curvature, where the axis is an axis of the center of curvature, are provided to the auxiliary shade, and the operation of moving the main-side rack member, 72 is converted into the operation of moving the one or two sub-side rack members by the conversion mechanism.

Besides, the association mechanism 70 may be configured to move the auxiliary shade 60 to advance and retract in association with the rotation of the windup shaft 34. That is, it is the configuration in which the operation of rotating the windup shaft 34 is converted into the operation of moving the auxiliary shade 60. For example, as the above-mentioned association mechanism, it suffices that a rack portion is provided to the other edge portion of the auxiliary shade, a spur gear coupled so as not to rotate relative to the windup shaft 34 is provided, with the axis thereof coinciding with the axis the windup shaft 34, and a conversion mechanism that converts the operation of rotating the spur gear into the operation of moving the rack portion is provided. As this conversion mechanism, such a configuration is adoptable that a bevel gear that meshes with the spur gear coupled to the windup shaft 34 and a spur gear that meshes with the bevel gear and can mesh with the rack portion are provided.

Not only limited to the case of being applied to the window 1 described above, the shade device 10 is also adoptable to other windows having trapezoidal, parallelogram, oval, and other shapes. The window, to which the shade device 10 is applied more suitably, is a window that is shaped such that the portions other than the sides on which the shade device is disposed project laterally with respect to the above-mentioned sides. That is, according to the shade device 10, the auxiliary shade 60 covers the lateral portions of the window that are difficult to be covered with the main shade 20 having, for example, a rectangular shape or a trapezoidal shape with a drawing-side edge as a short side, which enables to entirely cover the window.

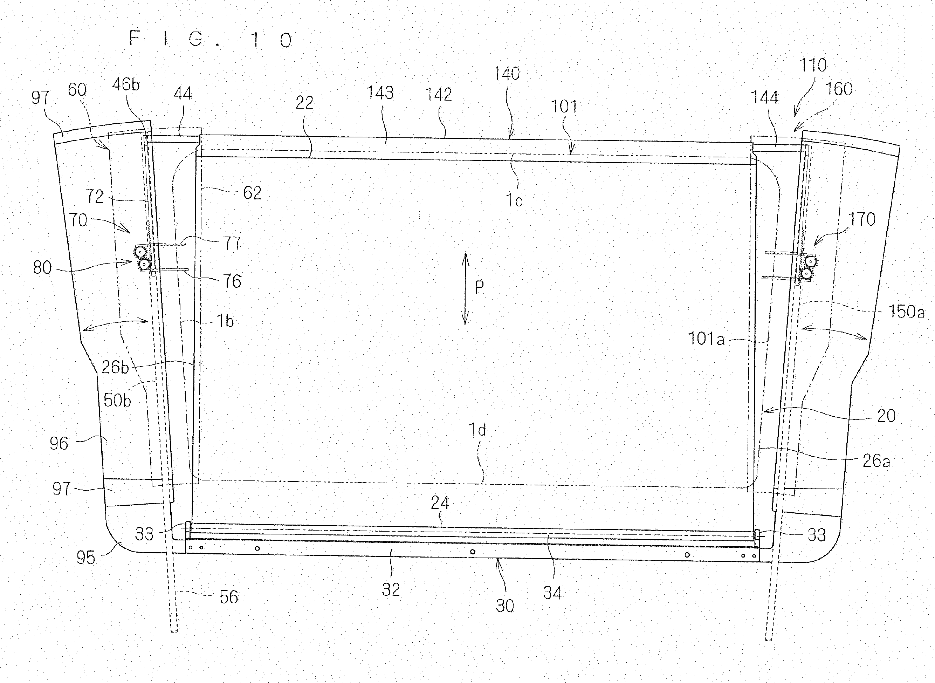

FIG. 10 shows an example in which a shade device 110 including a pair of auxiliary shades 60 and 160 is applied to a window 101 having a substantially trapezoidal shape With a ceiling-side long side projecting laterally with respect to the floor-side short side. The components having similar configurations as those of the shade device 10 described above are denoted by the same reference symbols and are not described here. The shade device 110 is configured such that the auxiliary shade 160 is disposed in a trim in front of the window 101 and an association mechanism 170 operates the auxiliary shade 160 to advance and retract in association with the operation of drawing and housing the main shade 20. Here, a guide rail 150a disposed on the front side of the window 1 is disposed along a front-side vertical frame 101a inclined toward the front portion of the car body, toward the ceiling side. A stay 142 of a drawing member 140 is configured such that advancing and retracting portions 44 and 144 are provided so as to advance and retract on both sides of a main body 143, and extends and retracts on the both sides correspondingly to the distance between the pair of guide rails 150a and 50b. The configuration for supporting the auxiliary shade 160, the association mechanism 170, and the auxiliary shade 160 is similar to the configuration for supporting the auxiliary shade 60, the association mechanism 70, and the auxiliary shade 60 of the shade device 10 described above.

Needless to say, the shade device 10 is applicable to various windows such as a rear window of an automobile, in addition to a side door window.

In a case where the shade device 10 is applied to a window whose both lateral portions are difficult to be covered by the main shade 20, a pair of auxiliary shades may be provided so as to shield the both portions lateral to the portion shielded by the main shade 20. In this case, it suffices that a pair of association mechanisms 70 are provided so as to respectively operate a pair of auxiliary shades to advance and retract. This configuration enables the application to the windows 1 having more various shapes.

In a case where a pair of guide rails are respectively provided to be inclined to both lateral edges 26a and 26b of the main shade 20, it suffices that advancing and retracting portions are provided to both sides of a main body and are formed so as to extend and retract at the both sides of the stay 42.

While the description has been given of the example in which regarding the shade device 10, the drawing member 40 is manually manipulated to draw and house the main shade 20, the main shade 20 may be automatically drawn and housed.

That is, a drive mechanism (not shown) capable of driving a pair of runners 46a and 46b to move along the pair of rails 50a and 50b may be provided. For example, a configuration in which the pair of runners 46a and 46b are respectively provided to portions of a wire, and the motor drives the wire to be, for example, wound and conveyed, to thereby cause the pair of runners 46a and 46b to slide along the pair of rails 50a and 50b is adoptable as the drive mechanism. In addition, a configuration in which long flexible rack members are respectively mounted to the pair of runners 46a and 46b and are caused two advance and retract toward and into the pair of guide rails 50a and 50b by a gear that is driven by a motor is adoptable as the drive mechanism.

According to the shade device 10 of the embodiment described above, the auxiliary shade 60 capable of shielding the rear portion of the window 1, which is located on the side of the front portion to be shielded by the main shade 20, is configured to advance and retract in a direction different from the drawing and housing direction P of the main shade 20 in association with the operation of drawing and housing the main shade 20. Accordingly, even in a case where the main shade 20 is drawn from the short side toward the long side of the window 1, the portion that cannot be shielded by the main shade 20 can be shielded by the auxiliary shade 60. That is, if the main shade 20 is formed into a shape, such as a rectangular shape or a trapezoidal shape with the drawing-side edge 22 being a short side, the window 1 can be entirely shielded without the main shade 20 extending and retracting. This enables to shield the window 1 while preventing the main shade 20 from becoming crinkled or sagged in the drawn state and to draw and house the main shade 20 more smoothly and more easily.

The association mechanism 70 is configured so as to convert the operation of moving the drawing member 40 attached to the drawing-side edge 22 of the main shade 20 in the drawing and housing direction P into the operation of moving the auxiliary shade 60. This enables to operate the auxiliary shade 60 to advance and retract more correspondingly to the operation of drawing and housing the main shade 20, which enhances the appearance while the window 1 is shielded.

The conversion mechanism 80 that includes the first gear member 82 including the gears 82a and 82b and the second gear member 86 including the gears 86a and 86b converts the operation of moving the main-side rack members 72 extending along the moving direction of the runner 46b into the operation of moving the pair of sub-side rack members 76 and 77 extending along the advancing and retracting direction of the auxiliary shade 60. That is, the operation of moving the drawing member 40 is converted into the operation of moving the auxiliary shade 60 through meshing between the main-side rack member 72 and the gear 82a, meshing between the gear 82b and the sub-side rack member 76, meshing between the gear 82a and the gear 86a, and meshing between the gear 86b and the sub-side rack member 77. This enables to operate the auxiliary shade 60 to advance and retract in association with the operation of drawing and housing the main shade 20 more reliably. In addition, the operation of advancing and retracting the auxiliary shade 60 can be designed more flexibly by the setting of the number of teeth, pitch circle diameter, and pitch of the gears 82a, 82b, 86a, and 86b.

The configuration is made such that the sub-side rack member 77 is provided in parallel to the sub-side rack member 76 with a distance therefrom in a position in which the plurality of tooth portions 77c lined along the parallel direction of the plurality of tooth portions 76c of the sub-side rack member 76 are opposed to the sub-side rack member 76, that the first gear member 82 converts the operation of moving the main-side rack member 72 into the operation of moving the sub-side rack member 76, and that the second gear member 86 converts the operation of rotating the first gear member 82 into the operation of moving the sub-side rack member 77. In this manner, the operation of moving the main-side rack member 72 is converted into the operation of moving the pair of sub-side rack members 76 and 77 in a state in which the first gear member 82 and the second gear member 86 are sandwiched between the pair of sub-side rack members 76 and 77. Accordingly, the auxiliary shade 60 can be stably held and moved to advance and retract through the meshing.

Further, the association mechanism 70 is configured to make the moving amount of the sub-side rack member 77 by the second gear member 86 larger than the moving amount of the sub-side rack member 76 by the first gear member 82 such that the main-shade-side edge 62 of the auxiliary shade 60 extends along the lateral edge 26b of the main shade 20 at the advanced location. This enables to prevent a gap between the main shade 20 and the auxiliary shade 60 to shield the window 1, which enhances the appearance. The auxiliary shade 60 is housed in the trim behind the window 1 at the retracted location in such a position that the main-shade-side edge 62 extends along the rear-side vertical frame 1b, which is excellent in appearance.

The plurality of tooth portions 76c and 77c of a pair of sub-side rack members 76 and 77 are arcuately lined in a convex manner toward the sub-side rack member 77 that is moved more than the sub-side rack member 76. This moves the auxiliary shade 60 to advance and retract while changing its location smoothly. In addition, the auxiliary shade 60 is caused to advance and retract in an arcuate path, which enables to design the operation of advancing and retracting the auxiliary shade 60 more flexibly.

Further, the auxiliary shade 60 is formed of a light-blocking member, and thus, the pair of sub-side rack members 76 and 77 provided to the auxiliary shade 60 are invisible. This makes the pair of sub-side rack members 76 and 77 blend with the surrounding interior members and enhances the appearance thereof.

While the shade device 10 has been described above in detail, the foregoing description is in all aspects illustrative, and the present invention is not limited thereto. That is, numerous modifications and variations can be devised in the described aspects without departing from the scope of the invention.

### Description of Reference Symbols

1 window
10 shade device
20 main shade
22 drawing-side edge
26b the other edge
30 windup device
40 drawing member
46b the other runner
60 auxiliary shade
62 main-shade-side edge
70 association mechanism
72 main-side rack member
76 one sub-side rack member
77 the other sub-side rack member
80 conversion mechanism
82 first gear member
86 second gear member
P drawing and housing direction

## Claims

1. A shade device for shielding a window, comprising:
a windup device;
a main shade configured to partially shield said window and attached to said windup device so as to be drawn therefrom and housed therein;
an auxiliary shade configured to shield, of said window, a portion lateral to a portion shielded by said main shade; and
an association mechanism that operates said auxiliary shade to advance and retract in a direction different from a drawing and housing direction of said main shade, in association with the operation of drawing and housing said main shade.

2. The shade device according to claim 1, further comprising a drawing member mounted to a drawing-side edge of said main shade,
wherein said association mechanism is configured to convert an operation of moving said drawing member in said drawing and housing direction into an operation of moving said auxiliary shade in an advancing and retracting direction.

3. The shade device according to claim 2, wherein said association mechanism comprises:
a main-side rack member that is coupled to an end of said drawling member and extends along a moving direction of the end of said drawing member;
one sub-side rack member that is provided to said auxiliary shade and extends along the advancing and retracting direction of said auxiliary shade; and
a conversion mechanism that includes at least one gear and converts an operation of moving said main-side rack member into an operation of moving said one sub-side rack member.

4. The shade device according to claim 3, wherein said one sub-side rack member is formed such that a plurality of tooth portions are lined in an arcuate shape.

5. The shade device according to claim 3, wherein
said association mechanism comprises the other sub-side rack member that extends along the advancing and retracting direction of said auxiliary shade and is provided to said auxiliary shade so as to be opposed to said one sub-side rack member with a distance therebetween, and
said conversion mechanism comprises:
a first gear member that converts the operation of moving said main-side rack member into the operation of moving said one sub-side rack member; and
a second gear member that converts an operation of rotating said first gear member into an operation of moving said other sub-side rack member.

6. The shade device according to claim 5, wherein said association mechanism is configured in such a manner that a main-shade-side edge of said auxiliary shade extends along a lateral edge of said main shade at an advanced location such that a moving amount of said one sub-side rack member by said first gear member and a moving amount of said other sub-side rack member by said second gear member differ from each other.

7. The shade device according to claim 6, wherein a plurality of tooth portions of said one sub-side rack member and a plurality of tooth portions of said other sub-side rack member are lined into corresponding arcuate shapes in a convex manner toward any one of said one sub-side rack member and said other sub-side rack member, said any one thereof being moved more than the other thereof.

8. The shade device according to claim 1, wherein
a pair of said auxiliary shades are provided so as to shield, of said window, both portions lateral to the portion shielded by said main shade, and
a pair of said association mechanism are provided so as to respectively operate said pair of auxiliary shades to advance and retract.

9. The shade device according to claim 1, wherein said auxiliary shade is formed of a light-blocking member.
